# EUROPEAN PATENT SPECIFICATION

(11) **EP 0 647 010 B1**
(45) Date of publication and mention of the grant of the patent: **27.08.1997**
(21) Application number: 94115158.1
(22) Date of filing: 27.09.1994
(51) Int. Cl.: H02K 29/03, H02K 21/22

(54) **Electric motor with permanent magnets and reduced cogging torque**
Dauermagneten-Elektromotor mit niedrigem pulsierenden Drehmoment
Moteur électrique à aimants permanents à faible pulsation de couple

(30) Priority: 30.09.1993 IT TO930716
(43) Date of publication of application: 05.04.1995
(73) Proprietor: GATE S.p.A., I-14100 Asti (IT)
(72) Inventor: Acquaviva, Sebastiano, I-10025 Pino Torinese,Torino (IT)
(74) Representative: Quinterno, Giuseppe

(56) References cited:
- EP-A- 0 112 636
- EP-A- 0 169 569
- EP-A- 0 502 831
- FR-A- 2 269 232
- FR-A- 2 386 928
- PATENT ABSTRACTS OF JAPAN vol. 11, no. 325 (E-551) 22 October 1987 & JP-A-62 114 454
- PATENT ABSTRACTS OF JAPAN vol. 13, no. 232 (E-765) 29 May 1989 & JP-A-01 039 250
- PATENT ABSTRACTS OF JAPAN vol. 10, no. 221 (E-424) 2 August 1986 & JP-A-61 058 455
- PATENT ABSTRACTS OF JAPAN vol. 10, no. 221 (E-424) 2 August 1986 & JP-A-61 058 456
- PATENT ABSTRACTS OF JAPAN vol. 10, no. 289 (E-442) (2345) 2 October 1986 & JP-A-61 106 035 (TOSHIBA) 24 May 1986

## Description

The present invention relates to systems for reducing or eliminating the cogging torque (or reluctance torque) in electric motors with permanent magnets, in particular in brushless motors, by acting on the shape and on the arrangement of the magnets.

Motors with permanent magnets are subject to a cogging torque which determines an oscillation of the torque produced by the motor itself and which is due to the periodical interactions between the magnetic field in the air gap created by the inductor (in this case by the permanent magnets) and to the non-uniformity of the permeance of the magnetic circuit of the armature framework or stator which is typically provided with channels or slots for housing the windings. In practice, the cogging torque is due to the fact that the stored magnetic energy in the air gap varies according to the angle defined by the position of the rotor relative to the stator.

It will be appreciated that since cogging torque is undesirable, designers of brushless motors have devised systems for reducing it. The method conventionally adopted is that of disrupting the periodicity of the magnetic field: this can be brought about by rendering the slots in the armature framework oblique along the principal axis of rotation of the motor (staggering the laminations constituting the armature with respect to one another) or varying the width or spacing of the permanent magnets or of the slots. Methods of this type, even though they are efficient in reducing the cogging torque, have the disadvantage that they also reduce the torque produced by the motor and increase the production cost of the motor.

Motors which adopt methods, according to the prior art, for reducing the cogging torque are disclosed, for instance, in EP-A-0 169 569, FR-A-7 810 574, EP-A-0 502 831.

The object of the present invention is to provide a motor with permanent magnets having reduced or no cogging torque whilst having a similar cost and complexity to motors produced according to the prior art.

In accordance with the present invention, there is provided a motor with permanent magnets, comprising an inductor having permanent magnet means which can generate an angular distribution of magnetic poles ; an armature separated from the inductor by an air gap and having a plurality of slots or channels facing the air gap ;
characterized in that the permanent magnet means are shaped and arranged such that the distribution of the density of magnetic energy (f) which can be stored in the air gap in the absence of slots in the armature , as a function of a linear coordinate (x) taken along a circumference coaxial to the axis of the motor and comprised in the air gap, has transitions in level in the increasing sense,and decreasing sense respectively in prearranged angular positions; and in that the slots in the armature are produced in positions such that, in operation, when a slot is in an angular position which corresponds to a transition in level of the distribution of the density of magnetic energy (f), another slot is in an angular position which corresponds to a transition in level of the distribution of the density of magnetic energy (f) having the opposite sign; and in that the permanent magnet means are shaped and arranged such that the distribution of the density of magnetic energy (f) in the air gap has transitions in level having a development which is asymmetrical relative to one axis, and in that the slots of the armature are shaped such that each of them can modify the distribution of the density of magnetic energy (f) in the air gap according to a modulating function (g) which has a local development symmetrical to the radial plane passing through the centre of the slot.

Further characteristics and advantages of the present invention will become clear from the following detailed description given with reference to the appended drawings, provided by way of non-limiting example, in which:
- Figure 1 is a graph showing the density of magnetic energy generated by an inductor pole in the air gap as a function of a co-ordinate x taken along the air gap when there are no slots in the armature framework;
- Figure 2 is a graph showing a function g modulating the magnetic energy in the air gap owing to the effect of slots in the armature framework as a function of the co-ordinate x; and
- Figure 3 shows in a sectional view a detail of a motor, in an ideal linear development, produced according to the present invention;
- Figure 4 illustrates a detail of an inductor according to the prior art by a view in section of a permanent magnet and the corresponding graph of the density of magnetic energy;
- Figure 5, similar to Figure 4 and in comparison therewith, illustrates a detail of an alternative embodiment of an inductor according to the present invention;
- Figures 6, 7 and 8 illustrate in section some alternative embodiments according to the present invention for the magnets of inductor ; and
- Figures 9 and 10 illustrate two alternative embodiments according to the present invention of an inductor produced by means of a single magnet.

It has been demonstrated mathematically and confirmed using finite element models that no cogging torque is generated at all if the permanent magnets of the inductor and the arrangement of the armature satisfy certain conditions. More specifically, the shape of the magnets should be such that the density of magnetic energy which is not modulated (which is proportional to the square of the magnetic induction B which would exist in the air gap if the stator armature did not have slots), satisfies certain conditions of symmetry which will be described below. Furthermore, the arrangement of the armature should be such that the development of the function of magnetic permeance in the air gap is equal to the axes of the slots.

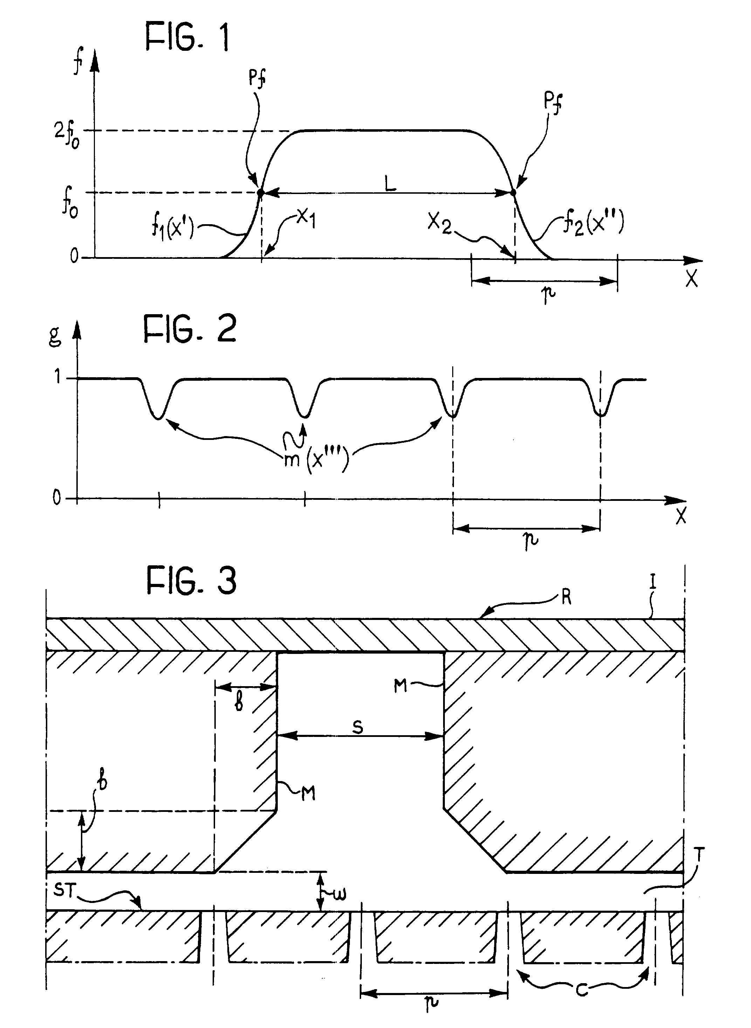

The first condition, relating to the magnets of the inductor, is that the magnets should be sufficiently spaced apart in order to have f=O and f'=0 (f' = first derivative of f) at at least one point of the interval separating two adjacent magnets, in which f is a function defining the development of the density of magnetic energy in the air gap around a circumference having its centre on the axis of the motor. The development of the resultant energy density f is shown in Figure 1 for a single magnet having uniform thickness in the central zone.

It can be seen that, in the central zone corresponding to the magnet, f has a practically constant development and, in correspondence with the two ends of the magnet, becomes substantially zero with two symmetrical curves which are substantially sigmoids. In the following, the sigmoid at the lefthand end (in Figure 1) is designated as f₁(x') and the sigmoid at the righthand end is designated f₂(x''), x' and x'' being co-ordinates taken on the x axis taking the points x₁ and x₂ respectively as points of origin, that the abscissas of the points of inflection Pf of these sigmoids. The value of f at each point of inflection Pf is designated f₀ and the distance between the two points of inflection is designated L.

The conditions of symmetry which f has to satisfy according to the present invention for reducing or eliminating the cogging torque will now be described.

In order to reduce the cogging torque to very low levels it is sufficient that f=2f₀ between the sigmoids, that is, in correspondence with the magnets, that f=constant outside the sigmoids, and that L=np. In order to eliminate the reluctance torque completely, it is also necessary for the functions f₁(x') and f₂(x") to be asymmetrical relative to the straight lines y = -x + y₁ and y = x + y₂ respectively, in which y₁ and y₂ are determined such that the straight lines pass through the points of inflection of each sigmoid respectively, for having L=np where p is the distance between the centres of two adjacent slots and n is a positive integer (n=1,2,3,...), and for f₁(x') and f₂(x") to be given by f₁(x')=f₀ (1+s(x')) and f₂(x")=f₀(1-s(x")), where s(x) can be any odd function with a short radius and uniform amplitude. This simply means that s(x) =-s(-x) and that s(x)=1 when x is large, in the case where x≥a when a≤p, a being the value of x from which zero is derived.

The condition in order that the permeance function g(x) (Figure 2) is equal with respect to the axes of the slots of the armature, is to maintain the induction in the iron of the armature framework below the knee of its magnetic characteristic curve B(H). If this is not the case, the function g(x) can be distorted as a result of which the cogging torque is not completely eliminated although it is considerably reduced by adopting the technique according to the present invention.

The reason as to why the cogging torque disappears if both the conditions are satisfied is the following:

The total magnetic energy is given by the integral of f.g along the air gap, in which the permeance function g is a modular function and represents the effects of the reluctance of the slots in the stator on the density of magnetic energy. As illustrated in Figure 2, it is reasonable to assume that the neighborhood of any slot g(x‴)=1-m(x‴), where x‴ is the distance along the air gap from the centre of the slot and where m(x''') represents the modulation depth which is nullified beyond the edges of the slots. The integral f.g only varies for rotor angles for which m(x''') overlaps one of the sigmoids of f, for example f₁(x'). However, if this occurs, f₂(x") overlaps m(x‴+L) by an identical quantity. Now L=np, such that m(x‴+L)=m(x‴) and the integration f₁(x')m(x‴)+f₂(x")m(x‴+L) is reduced to 2f₀m(x‴) which is independent of x.

It should also be noted that, if the rotor is taken beyond the region of overlap, one term in the integration becomes 2f₀m(x‴) and the other term becomes zero depending on the sense of rotation. In this way, the integral becomes independent of the angle of the rotor if f has the prescribed symmetry.

A further manner of proving that the total magnetic energy is independent of the angle of the rotor is by means of Fourier analysis. Given the symmetry of f, its Fourier components can include only its continuous components and the odd spatial frequencies π/p, 3π/p, 5π/p, ... Conversely, the Fourier components of g can only include its continuous components and the even spatial frequencies 2π/p, 4π/p, ... It will be appreciated that the integratal is reduced to a constant, that is, the integration product of the continuous components.

By means of finite element models, it has been determined that both the conditions of symmetry of f can be satisfied and thus the cogging torque eliminated by shaping and spacing the permanent magnets in an appropriate manner.

A possible embodiment is illustrated in Figure 3. This drawing shows a portion (linearised for convenience) of a brushless motor comprising a stator ST and a rotor R. The rotor comprises a support casing I to which a plurality of equidistant permanent magnets M separated by a distance S is connected. An air gap T of a width w is defined between the magnets M and the stator ST. The stator ST has a plurality of slots or grooves C at uniform distances p, facing the rotor. In order to eliminate the cogging torque, the magnets M have the following
characteristics:
- the ends of the magnets M are bevelled to a depth of approximately 1.5 w, in which w is the width of the air gap T, with a bevel angle of approximately 45°;
- the distance S between two adjacent magnets M is approximately equal to kp-3w, where k is a positive integer determined by the designer of the motor.

It should be noted that, in order to determine the value of k, it is convenient to start from k=1, which minimises the space between the magnets and thus leads to the production of a motor with a higher principal flow and thus better performance. However, if the distance between the magnets determined in this way is too small, the condition of asymmetry with respect to f₁(x) and f₂(x) may no longer be satisfied. In this case, it is necessary to modify the design of the magnets (if possible) or to chose a higher value for k.

Furthermore, the distance S between the magnets can be reduced by cutting dummy slots in the armature ST in order to reduce the distance p between the slots.

As an alternative to the embodiments described above, the desired distribution of the density of magnetic energy in the air gap can advantageously be generated using magnetic flux conductor means. As a matter of fact, in order to bring about the desired distribution, the shape of the magnets has to be accurate (the distribution depends substantially on the shape of the magnets). In general it is not easy (and it is expensive) to produce magnets with very strict dimensional tolerances by sintering. In the following, some alternative embodiments advantageously enabling the desired distribution to be obtained whilst having a low cost and being simple to construct will be described.

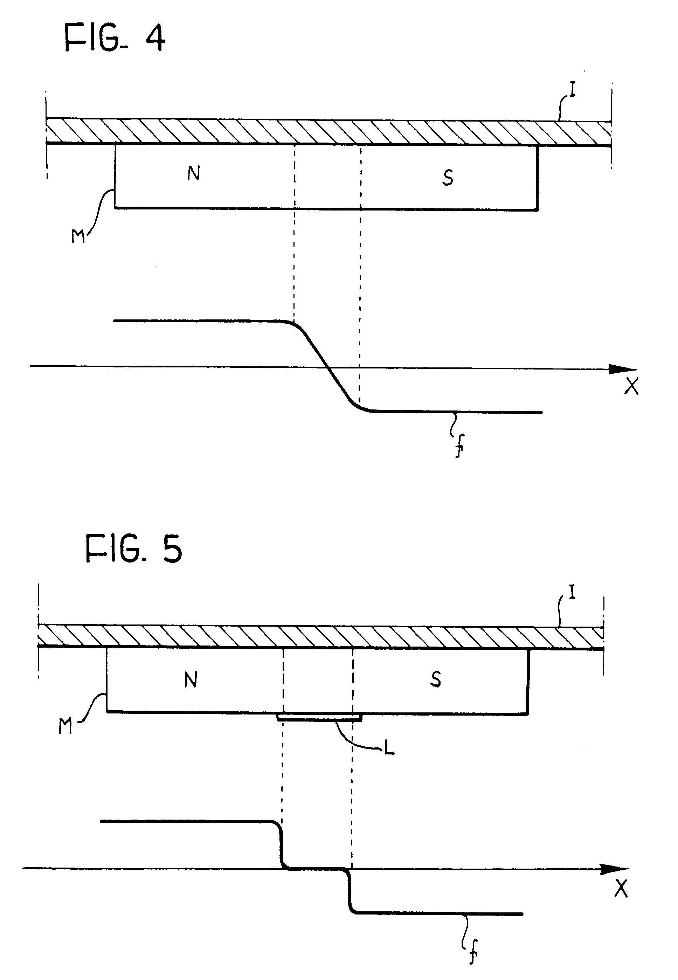

In Figures 4 to 10 the same reference letters and/or numerals have been given to parts and elements already described with reference to the preceding Figures. Figure 4 shows a permanent magnet M, of ideal linear development, disposed such that two inductor poles are produced, indicated N and S, opposite a motor. The development of the distribution of the density of magnetic energy is represented by the function f shown in the lower part of the Figure.

Figure 5 shows an embodiment in which the desired distribution is brought about using the same magnet shown in Figure 4 without the need for additional operations. In order to obtain the desired distribution, shown in the lower part of Figure 5, an element L conducting magnetic flux is used which is applied in the central region of the permanent magnet M and thus in the transitional area separating the two magnetic poles N and S. The conductor element L can consist of a plate or lamination made of steel or some other material which conducts magnetic flux.

The function of the element L is to convey the magnetic flux through itself (in practice short circuiting it) in the transitional area between the two poles N and S of the permanent magnet M. In this way, the element L ensures that the distribution f and its first derivative is zero in this transitional area.

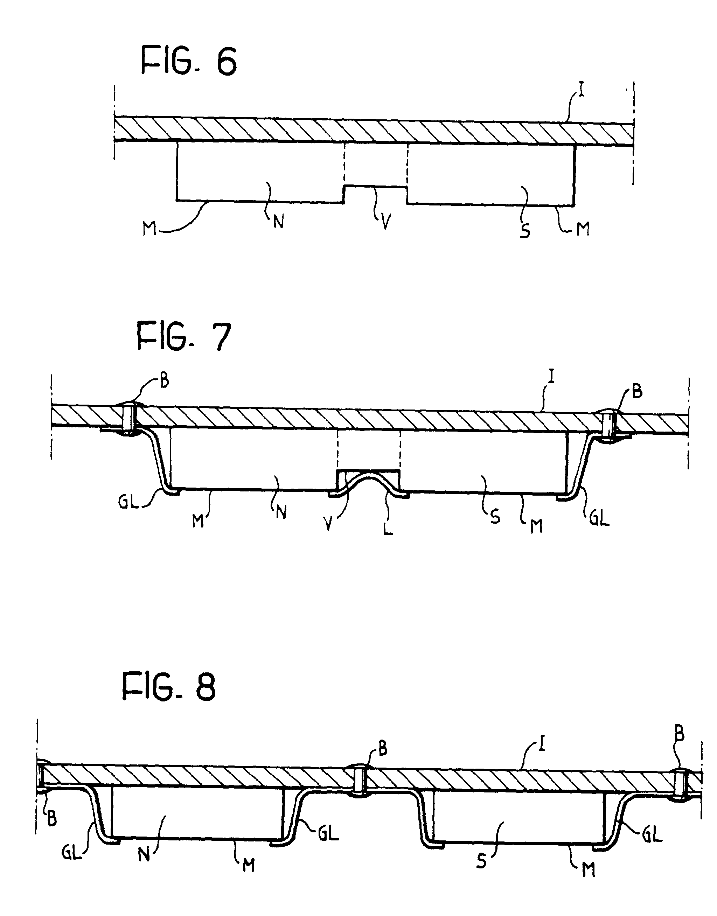

Figure 6 illustrates an alternative embodiment in which the desired development of the distribution f is brought about by providing a notch or groove V, of a substantially rectangular shape, in correspondence with the transitional region of the permanent magnet M. Figure 7 shows a further alternative embodiment in which both the above-described devices are adopted, that is the notch V and the conductor element L. Furthermore, in order to bring about the desired development of the distribution f, elements GL conducting the magnetic flux are also provided in correspondence with the two ends of the permanent magnet M.

The elements GL conducting the magnetic flux enable the magnetic flux to be short-circuited in correspondence with the ends of the permanent magnet M on the casing I and also have the function of rendering the magnet M integral with the casing I. The conductor elements GL are in fact in the form of clips and are secured to the casing I by means of rivets, or or the like,B.

Figure 8 shows an alternative embodiment in which one permanent magnet M is used for each pole. In this case, the conductor elements GL are used, similarly to the case described above, for holding the magnets M and for ensuring the desired distribution f in correspondence with their ends.

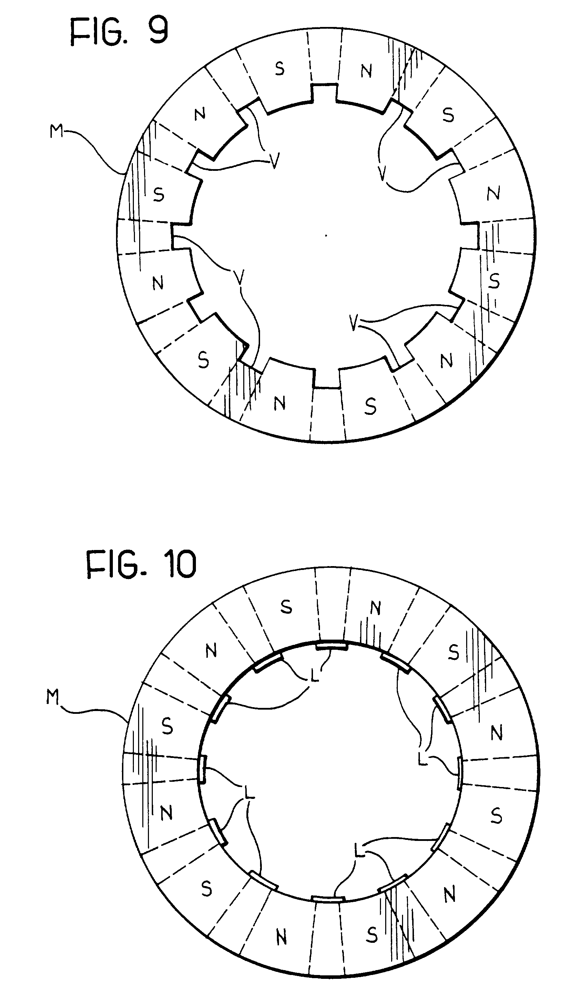

In some motors, the entire distribution of the magnetic poles of the inductor can be brought about by a magnetic tubular element having zones of permanent magnetisation alternately of opposite signs. The aforementioned devices can also be used in this type of embodiment. Figures 9 and 10 in fact show (in axial view) two monolithic tubular permanent magnets M obtained by sintering. In the magnet M of Figure 9 the desired distribution is brought about by means of the notches V described above whilst in the magnet M of Figure 10 the distribution is brought about by the conductor elements L. It is evidently possible to combine the notches V with the conductor elements L also in this case.

In order substantially to reduce the reluctance torque, it is further sufficient that, when β defines the angular opening for a generic magnet of the motor (expressed in degrees):${\text{β = K (360°/n}}_{\text{c}} {\text{) + (4/p) (1-1/(5p}}^{\text{(3p-2)/2)}} \text{)}$ p = constant and the magnets are equal to one another and are regularly spaced apart;
where n_{c} is the number of slots in the air gap (real or dummy), p is the number of pairs of poles, that is the pairs of magnets, and:${\text{K = 1, 2, ..., (n}}_{\text{c}} \text{/2p-1)}$ in which n_{c}/2p is an integer greater than 1.

For example, for a motor in which:
n_{c} = 48 (24 slots + 24 dummy slots)
p = 4
the maximum magnetic flux from the pole is obtained when β is as large as possible, that is, when:${\text{K = n}}_{\text{c}} \text{/2p-1 = 48/8-1 = 5}$ and thus β is:${\text{β^ = 5(360°/48) + (4/4) (1-1/5.4}}^{\text{(3.4-2)/2)}} \text{)=38.5°.}$

The magnet to be used, however, has an angular opening of 38.5° ± 0.5°.

As explained, this also applies when the armature reactions occur.

Modifications are possible within the scope of the appended claims, for example as regards the shape of the bevelling of the magnets.

## Claims

1. A motor with permanent magnets,
comprising an inductor (R) having permanent magnet means which can generate an angular distribution of magnetic poles (M); an armature (ST) separated from the inductor (R) by an air gap (T) and having a plurality of slots or channels (C) facing the air gap (T);
characterized in that the permanent magnet means (M) are shaped and arranged such that the distribution of the density of magnetic energy (f) which can be stored in the air gap (T) in the absence of slots (C) in the armature (ST), as a function of a linear coordinate (x) taken along a circumference coaxial to the axis of the motor and comprised in the air gap (T), has transitions in level in the increasing sense and decreasing sense respectively in prearranged angular positions; and in that the slots (C) in the armature (ST) are produced in positions such that, in operation, when a slot (C) is in an angular position which corresponds to a transition in level of the distribution of the density of magnetic energy (f), another slot (C) is in an angular position which corresponds to a transition in level of the distribution of the density of magnetic energy (f) having the opposite sign; and in that the permanent magnet means (M) are shaped and arranged such that the distribution of the density of magnetic energy (f) in the air gap (T) has transitions in level having a development which is asymmetrical relative to one axis, and in that the slots (C) of the armature (ST) are shaped such that each of them can modify the distribution of the density of magnetic energy (f) in the air gap (T) according to a modulating function (g) which has a local development symmetrical to the radial plane passing through the centre of the slot (C).

2. A motor according to Claim 1,
characterized in that the permanent magnet means (M) are shaped and arranged such that the distribution of the density of magnetic energy (f) in the air gap (T) has a substantially constant value (2f₀) between two consecutive transitions in level.

3. A motor according to Claim 1 or Claim 2, wherein said air gap (T) has a width (w),
characterized in that the permanent magnet means (M) are spaced apart and shaped such that f(x) defines a function representing the distribution of the censity of magnetic energy which can be stored in the air gap (T) in the absence of slots in the armature, (x) being a linear coordinate taken along a circumference coaxial to the axis cf the motor and comprised in the air gap, and said f(x) having a substantially constant development with a value equal to 2f₀ substantially in correspondance with the magnetic poles(M), and defined f₁(x') and f₂(x") two functions representing the function f(x) in two neighborhoods located in correspondance with the ends of one of the magnetic poles (M), x' and x'' being two coordinates taken along the x axis, the two points (x₁, x₂), in which the function f(x) assumes a value of f₀, being considered as origins, the function f(x) and the functions f₁(x') and f₂(x") satisfy the following conditions:
- for at least one value of x, in a range between two adjacent magnetic poles (M), the function f(x) is substantially constant (f'(x)=0);
- (x₁, x₂) being two points on the x axis where f(x)=f₀, substantially close to any two ends of the magnetic poles (M) when one of the points (x₁, x₂) is in correspondence with one of the slots (C), the other of the two points (x₁, x₂) also being in correspondence with one of these slots (C).

4. A motor according to Claim 3,
characterized in that f₁(x') and f₂(x'') satisfy the condition:${\text{f}}_{\text{1}} {\text{(x') = f}}_{\text{0}} {\text{(1+s(x')) and f}}_{\text{2}} {\text{(x'') = f}}_{\text{0}} \text{(1-s(x''))}$ in which s(x) satisfies the following conditions:$\text{s(x) = - s(-x)}$$\text{s(x) = 1 when x≥ p/2.}$

5. A motor according to Claim 4,
characterized in that the permanent magnet means comprise permanent magnets (M) shaped such that, β defines the angular opening for any one of the magnets (M), comprising possible bevels and expressed in sexagesimals, the value of β substantially being provided by the following formula:${\text{β^ = K(360°/n}}_{\text{c}} {\text{) + (4/p) (1-1/(5p}}^{\text{(3p-2)/2}} \text{))}$ in which:
- n_{c} is the number of slots (C);
- p is the number of pairs of poles (p); and
- K is an integer selected from 1, 2, ..., (n_{c}/2p-1) in which n_{c}/2p is an integer greater than 1.

6. A motor according to any one of the preceding claims, characterized in that the permanent magnet means (M) comprise magnetic flux conductor means (L, GL) which can impose the desired development on the distribution of the density of magnetic energy f(x) in the air gap (T) in correspondence with the changes in level.

7. A motor according to Claim 6,
characterized in that the magnetic flux conductor means (GL) can hold the permanent magnets (M).

8. A motor according to Claim 7,
characterized in that the permanent magnet means comprise a permanent magnet (M) having at least two opposite magnetic poles (N, S); and in that the magnetic flux conductor means (L) are applied to the permanent magnet (M) in correspondence with a transitional region between the two opposite poles (N, S).

9. A motor according to Claim 7 or Claim 8, characterized in that the magnetic flux conductor means (L, GL) can convey the magnetic flux therethrough such that the density of magnetic energy f(x) in the air gap (T) is substantially zero in correspondence therewith.

10. A motor according to any one of Claims 1 to 5, characterized in that the permanent magnet means comprise a permanent magnet (M) having at least two opposite magnetic poles (N, S) and a slot (V) facing the air gap (T) in correspondence with a transitional region between the two opposite poles (N, S).

11. A motor according to any one of Claims 6 to 9, characterized in that the magnetic flux conductor means (L, GL) are made of metal.

12. A motor according to Claim 11,
characterized in that the magnetic flux conductor means (L, GL) are made of sheet steel.

13. A motor according to Claim 4 or Claim 5, characterized in that the ends of the magnets (M) are bevelled.

14. A motor according to Claim 13,
characterized in that the ends of the magnets (M) are bevelled substantially at 45° for a depth of approximately 1.5 w.

15. A motor according to any one of Claims 3 to 14, characterized in that the distance S between two adjacent magnets (M) is such that S = Kp - 3w, K being a positive integer (K = 1, 2, 3, ...).

16. A motor according to Claim 13, characterized in that part of the slots (C) do not contain armature windings in order to reduce the distance S.

## Patentansprüche

1. Dauermagneten-Motor, umfassend einen Induktor (R) mit Dauermagnetmitteln, die eine Winkelverteilung von Magnetpolen (M) erzeugen können; einen vom Induktor (R) durch einen Luftspalt (T) getrennten Anker (ST) mit einer Vielzahl an Schlitzen oder Kanälen (C), die dem Luftspalt (T) gegenüberliegen;
dadurch gekennzeichnet, daß die Dauermagnetmittel (M) so geformt und angeordnet sind, daß die Verteilung der magnetischen Energiedichte (f), die im Luftspalt (T) bei Fehlen von Schlitzen (C) im Anker (ST) gespeichert werden kann, als Funktion einer linearen Koordinate (x), die entlang einer zur Achse des Motors koaxialen und im Luftspalt (T) enthaltenen Kreislinie genommen ist, Niveauübergänge in zunehmender Richtung bzw. in abnehmender Richtung bei vorher bestimmten Winkelpositionen aufweist; und daß die Schlitze (C) im Anker (ST) an Positionen hergestellt werden, die so gewählt sind, daß sich beim Betrieb, wenn sich ein Schlitz (C) in einer Winkelposition befindet, die einem Niveauübergang der Verteilung der magnetischen Energiedichte (f) entspricht, ein weiterer Schlitz (C) in einer Winkelposition befindet, die einem Niveauübergang der Verteilung der magnetischen Energiedichte (f) mit dem entgegengesetzten Vorzeichen entspricht; und daß die Dauermagnetmittel (M) so geformt und angeordnet sind, daß die Verteilung der magnetischen Energiedichte (f) im Luftspalt (T) Niveauübergänge mit einer Entwicklung aufweist, die bezüglich einer Achse asymmetrisch ist, und daß die Schlitze (C) des Ankers (ST) so geformt sind, daß jeder von ihnen die Verteilung der magnetischen Energiedichte (f) im Luftspalt (T) gemäß einer Modulierfunktion (g) modifizieren kann, die eine lokale Entwicklung aufweist, die zur durch das Zentrum des Schlitzes (C) gehenden radialen Ebene symmetrisch ist.

2. Motor nach Anspruch 1, dadurch gekennzeichnet, daß die Dauermagnetmittel (M) so geformt und angeordnet sind, daß die Verteilung der magnetischen Energiedichte (f) im Luftspalt (T) zwischen zwei aufeinanderfolgenden Niveauübergängen einen im wesentlichen konstanten Wert (2f₀) aufweist.

3. Motor nach Anspruch 1 oder Anspruch 2, wobei der Luftspalt (T) eine Breite (w) aufweist, dadurch gekennzeichnet, daß die Dauermagnetmittel (M) so im Abstand voneinander angeordnet und geformt sind, daß f(x) eine Funktion definiert, die die Verteilung der magnetischen Energiedichte darstellt, die im Luftspalt (T) bei Fehlen von Schlitzen im Anker gespeichert werden kann, wobei (x) eine lineare Koordinate ist, die entlang einer zur Achse des Motors koaxialen und im Luftspalt enthaltenen Kreislinie genommen ist, und wobei f(x) eine im wesentlichen konstante Entwicklung mit einem Wert gleich 2f₀ im wesentlichen in Entsprechung mit den Magnetpolen (M) aufweist, und daß f₁(x') und f₂(x") zwei Funktionen definieren, die die Funktion f(x) in zwei Umgebungen darstellen, die in Entsprechung mit den Enden eines der Magnetpole (M) lokalisiert sind, wobei x' und x" zwei entlang der x-Achse genommene Koordinaten sind, und wobei die zwei Punkte (x₁, x₂), bei denen die Funktion f(x) einen Wert f₀ annimmt, als Ursprünge angesehen werden, wobei die Funktion f(x) und die Funktionen f₁(x') und f₂(x") die folgenden Bedingungen erfüllen:
- für zumindest einen Wert von x, in einem Bereich zwischen zwei benachbarten Magnetpolen (M), ist die Funktion f(x) im wesentlichen konstant (f'(x) = 0);
- wobei (x₁, x₂) zwei Punkte auf der x-Achse sind, wo f(x) = f₀ ist, im wesentlichen nahe zwei beliebigen Enden der Magnetpole (M), wenn sich einer der Punkte (x₁, x₂) in Entsprechung mit einem der Schlitze (C) befindet, wobei sich der andere der zwei Punkte (x₁, x₂) auch in Entsprechung mit einem dieser Schlitze (C) befindet.

4. Motor nach Anspruch 3, dadurch gekennzeichnet, daß f₁(x') und f₂(x") die Bedingung erfüllen:${\text{f}}_{\text{1}} {\text{(x') = f}}_{\text{0}} {\text{(1 + s(x')) und f}}_{\text{2}} {\text{(x") = f}}_{\text{0}} \text{(1 - s(x"))}$ wobei s(x) die folgenden Bedingungen erfüllt:$\text{s(x) = -s(-x)}$$\text{s(x) = 1 wenn x ≥ p/2.}$

5. Motor nach Anspruch 4, dadurch gekennzeichnet, daß die Dauermagnetmittel Dauermagneten (M) umfassen, die so geformt sind, daß die Winkelöffnung für jeden der Dauermagneten (M) definiert, mögliche Abschrägungen umfassend und in Sexagesimalen ausgedrückt, wobei der Wert von β im wesentlichen durch die folgende Formel geliefert wird:${\text{β = K(360°/n}}_{\text{c}} {\text{) + (4/p)(1-1/(5p}}^{\text{(3p-2/2}} \text{))}$ wobei:
- n_{c} die Anzahl der Schlitze (C) ist;
- p die Anzahl an Polpaaren (p) ist; und
- K eine ganze Zahl ist, gewählt aus 1, 2 ..., (n_{c}/2p-1), worin n_{c}/2p eine ganze Zahl größer als 1 ist.

6. Motor nach einem der vorangehenden Ansprüche, dadurch gekennzeichnet, daß die Dauermagnetmittel (M) magnetische Flußleitermittel (L, GL) umfassen, die der Verteilung der magnetischen Energiedichte f(x) im Luftspalt (T) in Entsprechung mit den Niveauänderungen die gewünschte Entwicklung auferlegen können.

7. Motor nach Anspruch 6, dadurch gekennzeichnet, daß die magnetischen Flußleitermittel (GL) die Dauermagneten (M) festhalten können.

8. Motor nach Anspruch 7, dadurch gekennzeichnet, daß die Dauermagnetmittel einen Dauermagneten (M) mit zumindest zwei entgegengesetzten Magnetpolen (N, S) umfassen; und daß die magnetischen Flußleitermittel (L) am Dauermagnet (M) in Entsprechung mit einer Übergangszone zwischen den zwei entgegengesetzten Polen (N, S) angebracht werden.

9. Motor nach Anspruch 7 oder Anspruch 8, dadurch gekennzeichnet, daß die magnetischen Flußleitermittel (L, GL) den magnetischen Fluß so hindurch leiten können, daß die magnetische Energiedichte f(x) im Luftspalt (T) in Entsprechung damit im wesentlichen null ist.

10. Motor nach einem der Ansprüche 1 bis 5, dadurch gekennzeichnet, daß die Dauermagnetmittel einen Dauermagneten (M) mit mindestens zwei entgegengesetzten Magnetpolen (N, S) und einem Schlitz (V) umfassen, der dem Luftspalt (T) in Entsprechung mit einer Übergangszone zwischen den zwei entgegengesetzten Polen (N, S) gegenüberliegt.

11. Motor nach einem der Ansprüche 6 bis 9, dadurch gekennzeichnet, daß die magnetischen Flußleitermittel (L, GL) aus Metall hergestellt sind.

12. Motor nach Anspruch 11, dadurch gekennzeichnet, daß die magnetischen Flußleitermittel (L, GL) aus Stahlblech hergestellt sind.

13. Motor nach Anspruch 4 oder Anspruch 5, dadurch gekennzeichnet, daß die Enden der Magneten (M) abgeschrägt sind.

14. Motor nach Anspruch 13, dadurch gekennzeichnet, daß die Enden der Magneten (M) über eine Tiefe von etwa 1,5 w im wesentlichen 45° abgeschrägt sind.

15. Motor nach einem der Ansprüche 3 bis 14, dadurch gekennzeichnet, daß der Abstand S zwischen zwei benachbarten Magneten (M) so gestaltet ist, daß$\text{S = Kp - 3w,}$ wobei K eine positive ganze Zahl ist (K = 1, 2, 3, ...).

16. Motor nach Anspruch 13, dadurch gekennzeichnet, daß ein Teil der Schlitze (C) keine Ankerwicklungen enthält, um den Abstand S zu verringern.

## Revendications

1. Moteur à aimants permanents, comprenant un inducteur (R) comportant des moyens formant aimants permanents qui peuvent générer une répartition angulaire de pôles magnétiques (M) ; un induit (ST) séparé de l'inducteur (R) par un entrefer (T) et comportant une pluralité de fentes ou canaux (C) faisant face à l'entrefer (T) ;
caractérisé en ce que les moyens formant aimants permanents (M) sont formés et agencés de sorte que la répartition de la densité d'énergie magnétique (f) qui peut être stockée dans l'entrefer (T) en l'absence de fentes (C) dans l'induit (ST), comme une fonction d'une coordonnée linéaire (x) prise le long d'une circonférence coaxiale à l'axe du moteur et comprise dans l'entrefer (T), ait des transitions de niveau dans le sens croissant et dans le sens décroissant respectivement dans des positions angulaires préagencées ; et en ce que les fentes (C) dans l'induit (ST) sont réalisées dans des positions telles que, en fonctionnement, lorsqu'une fente (C) est dans une position angulaire qui correspond à une transition de niveau de la répartition de la densité d'énergie magnétique (f), une autre fente (C) est dans une position angulaire qui correspond à une transition de niveau de la répartition de la densité d'énergie magnétique (f) ayant le signe opposé ; et en ce que les moyens formant aimants permanents (M) sont formés et agencés de sorte que la répartition de la densité d'énergie magnétique (f) dans l'entrefer (T) ait des transitions de niveau ayant un développement qui est asymétrique par rapport à un axe et en ce que les fentes (C) de l'induit (ST) sont formées de sorte que chacune d'elles puisse modifier la répartition de la densité d'énergie magnétique (f) dans l'entrefer (T) conformément à une forction de modulation (g) qui a un développement local symétrique au plan radial passant par le centre de la fente (C).

2. Moteur selon la revendication 1, caractérisé en ce que les moyens formant aimants permanents (M) sont formés et agencés de sorte que la répartition de la densité d'énergie magnétique (f) dans l'entrefer (T) ait une valeur sensiblement constante (2f₀) entre deux transitions de niveau consécutives.

3. Moteur selon la revendication 1 ou la revendication 2, dans lequel ledit entrefer (T) a une largeur (W), caractérisé en ce que les moyens formant aimants magnétiques (M) sont espacés et formés de sorte que f(x) définisse une fonction représentant la répartition de la densité d'énergie magnétique qui peut être stockée dans l'entrefer (T) en l'absence de fentes dans l'induit, (x) étant une coordonnée linéaire prise le long d'une circonférence coaxiale à l'axe du moteur et comprise dans l'entrefer et ledit f(x) ayant un développement sensiblement constant avec une valeur égale à 2f₀ sensiblement en correspondance avec les pôles magnétiques (M) et définie f₁(x') et f₂(x") deux fonctions représentant la fonction f(x) dans deux voisinages situés en correspondance avec les extrémités d'un des pôles magnétiques (M), x' et x" étant deux coordonnées prises le long de l'axe x, les deux points (x₁, x₂), dans lequel la fonction f(x) prend une valeur de f₀, étant considérés comme des origines, la fonction f(x) et les fonctions f₁(x') et f₂(x") satisfont aux conditions suivantes :
- pour au moins une valeur de x, dans une plage entre deux pôles magnétiques (M) contigus, la fonction f(x) est sensiblement constante (f'(x)=0) ;
- (x₁, x₂) étant deux points sur l'axe x où f(x)=f₀, sensiblement prés de l'une quelconque des deux extrémités des pôles magnétiques (M) lorsque l'un des points (X₁, X₂) est en correspondance avec l'une des fentes (C), l'autre des deux points (x₁, x₂) étant également en correspondance avec l'une de ces fentes (C).

4. Moteur selon la revendication 3, caractérisé en ce que f₁(x') et f₂(x") satisfont à la condition :${\text{f}}_{\text{1}} {\text{(x') = f}}_{\text{0}} {\text{(1+s(x')) et f}}_{\text{2}} {\text{(x") = f}}_{\text{0}} \text{(1-s(x"))}$ dans laquelle s(x) satisfait aux conditions suivantes :$\text{s(x) = - s(-x)}$$\text{s(x) = 1 lorsque x ≥ p/2.}$

5. Moteur selon la revendication 4, caractérisé en ce que les moyens formant aimants permanents comprennent des aimants permanents (M) formés de sorte que β définisse l'ouverture angulaire pour l'un quelconque des aimants (M), comprenant d' éventuels angles et exprimés en sexagésimaux, la valeur de β étant fournie sensiblement par la formule suivante :${\text{β = K(360°/n}}_{\text{c}} {\text{) + (4/p) (1-1/(5p}}^{\text{(3p-2)/2}} \text{))}$ dans laquelle :
- n_{c} est le nombre de fentes (C) ;
- p est le nombre de paires de pôles (p) ; et
- K est un entier choisi parmi 1, 2, ..., (n_{c}/2p-1) dans lequel n_{c}/2p est un entier supérieur à 1.

6. Moteur selon l'une quelconque des revendications précédentes, caractérisé en ce que les moyens formant aimants permanents (M) comprennent des moyens conducteurs de flux magnétique (L, GL) qui peuvent imposer le développement souhaité à la répartition de la densité d'énergie magnétique f(x) dans l'entrefer (T) en correspondance avec les changements de niveau.

7. Moteur selon la revendication 6, caractérisé en ce que les moyens conducteurs de flux magnétique (GL) peuvent contenir les aimants permanents (M).

8. Moteur selon la revendication 7, caractérisé en ce que les moyens formant aimants permanents comprennent un aimant permanent (M) ayant au moins deux pôles magnétiques opposés (N, S) ; et en ce que les moyens conducteurs de flux magnétique (L) sont appliqués à l'aimant permanent (M) en correspondance avec une région de transition entre les deux pôles opposés (N, S).

9. Moteur selor la revendication 7 ou la revendication 8, caractérisé en ce que les moyens conducteurs de flux magnétique (L, GL) peuvent transporter le flux magnétique à travers eux de telle sorte que la densité d'énergie magnétique f(x) dans l'entrefer (T) soit sensiblement nulle en correspondance avec ceux-ci.

10. Moteur selon l'une quelconque des revendications 1 à 5, caractérisé en ce que les moyens formant aimants permanents comprennent un aimant permanent (M) ayant au moins deux pôles magnétiques opposés (N, S) et une fente (V) faisant face à l'entrefer (T) en correspondance avec une région de transition entre les deux pôles opposés (N, S).

11. Moteur selon l'une quelconque des revendications 6 à 9, caractérisé en ce que les moyens conducteurs de flux magnétique (L, GL) sont réalisés en métal.

12. Moteur selon la revendication 11, caractérisé en ce que les moyens conducteurs de flux magnétique (L, GL) sont réalisés en tale d'acier.

13. Moteur selon la revendication 4 ou la revendication 5, caractérisé en ce que les extrémités des aimants (M) sont coniques.

14. Moteur selon la revendication 13, caractérisé en ce que les extrémités des aimants (M) sont coniques sensiblement à 45° pour une profondeur d'environ 1,5 w.

15. Moteur selon l'une quelconque des revendications 3 à 14, caractérisé en ce que la distance S entre deux aimants (M) contigus est telle que$\text{S = Kp - 3w,}$ K étant un entier positif (K = 1, 2, 3, ...).

16. Moteur selon la revendication 13, caractérisé en ce qu'une partie des fentes (C) ne contient pas d'enroulements d'induit afin de réduire la distance S.
